# EUROPÄISCHE PATENTSCHRIFT

(11) **EP 3 326 131 B1**
(45) Veröffentlichungstag und Bekanntmachung des Hinweises auf die Patenterteilung: **28.08.2019**
(21) Anmeldenummer: 16797835.2
(22) Anmeldetag: 15.11.2016
(51) Int. Cl.: G06Q 20/32, G06Q 20/40, G06Q 20/18, G06Q 30/04, G07F 13/02, G06K 7/10, G06K 7/14

(54) **VERFAHREN ZUM AUSLÖSEN EINES BARGELDLOSEN BEZAHLVORGANGES VON EINEM KRAFTFAHRZEUG AUS**
METHOD FOR TRIGGERING A CHASHLESS PAYMENT FROM A VEHICLE
PROCÉDÉ D'INITIALISATION D'UN PAIEMENT EN MONNAIE SCRIPTURALE À PARTIR D'UN VÉHICULE

(30) Priorität: 09.02.2016 DE 102016001454
(43) Veröffentlichungstag der Anmeldung: 30.05.2018
(73) Patentinhaber: Audi AG, 85045 Ingolstadt (DE)
(72) Erfinder: HOLLMIG, Ralph, 85049 Ingolstadt (DE)
(86) Internationale Anmeldenummer: PCT/EP2016/077623
(87) Internationale Veröffentlichungsnummer: WO 2017/137105

(56) Entgegenhaltungen:
- EP-A1- 2 124 177
- EP-A1- 2 727 751
- DE-B3-102011 105 420
- US-A1- 2010 280 956
- US-A1- 2010 332 363
- US-A1- 2012 323 763
- US-A1- 2013 281 017
- US-A1- 2014 213 176
- US-A1- 2014 244 504

## Beschreibung

Die Erfindung betrifft ein Verfahren zum Auslösen eines bargeldlosen Bezahlvorganges von einem Kraftfahrzeug aus. Zu der Erfindung gehören auch eine Vorrichtung, über welche von dem Kraftfahrzeug aus der Bezahlvorgang ausgelöst werden kann. Das Kraftfahrzeug und die Vorrichtung bilden zusammen ein Bezahlsystem für eine bargeldlose Bezahlung, das ebenfalls Bestandteil der Erfindung ist.

Um von einem Kraftfahrzeug aus bargeldlos ein Produkt zu bezahlen, beispielsweise getankten Kraftstoff, ist aus der US 2010/0332363 A1 bekannt, dass das Kraftfahrzeug Identifizierungsdaten an eine stationäre Vorrichtung aussendet, welche dann anhand dieser Identifizierungsdaten den Bezahlvorgang durchführt. Die Identifizierungsdaten können beispielsweise die Fahrgestellnummer umfassen. Um einen Missbrauch des Systems zu verhindern, kann ein Beleg an den Fahrzeughalter gesendet werden, damit dieser den Bezahlvorgang überprüfen kann. Um obige Identifizierungsdaten an die Vorrichtung zu übertragen, ist allerdings eine WLAN-Verbindung (WLAN - Wireless Local Area Network) nötig. Die WLAN-Verbindung macht es notwendig, dass das Kraftfahrzeug und die fahrzeugexterne, stationäre Vorrichtung technisch aufeinander abgestimmt sind. Daher ist die Durchführung des Bezahlvorganges mittels der Vorrichtung nur nach entsprechender technischer Aufrüstung des Kraftfahrzeugs möglich.

Aus der DE 10 2011 105 420 B3 ist bekannt, einen automatisierten Bezahlvorgang auf der Grundlage eines digitalen Berechtigungstokens durchzuführen. Um hierbei zu verhindern, dass der digitale Berechtigungstoken abgefangen und dann für weitere Bezahlvorgänge genutzt wird, wird stets geprüft, ob sich das Kraftfahrzeug, für welches der Berechtigungstoken gilt, auch tatsächlich physisch in der Nähe der Vorrichtung zum Durchführen des Bezahlvorganges befindet. Hierzu kann beispielsweise eine Videoüberwachung mit Kennzeichenerkennung vorgesehen sein. Nachteilig bei der Videoüberwachung von Kennzeichen ist, dass nach Änderung des Kennzeichens, wie es beispielsweise aufgrund eines Umzugs des Fahrzeughalters nötig sein kann, eine aufwendige Anpassung des Bezahlsystems notwendig ist, damit auch mittels des neuen Kennzeichens der Bezahlvorgang weiter möglich ist.

Aus der DE 10 2012 021 403 A1 ist bekannt, dass in einem Kamerabild, dass mehrere Kraftfahrzeuge zeigt, dasjenige, welches über Funk bestimmte digitale Erkennungsdaten aussendet, identifiziert werden kann, indem durch das Kraftfahrzeug zusammen mit den digitalen Erkennungsdaten auch beispielsweise eine Geschwindigkeitsangabe ausgesendet wird und dann in dem Kamerabild überprüft wird, welches der darin abgebildeten Kraftfahrzeuge tatsächlich mit einer entsprechenden Fahrgeschwindigkeit fährt. Hierdurch kann beispielsweise überprüft werden, ob ein Kraftfahrzeug Zugang zu einem Parkhaus erhält, weil es in dem Kamerabild als dasjenige Kraftfahrzeug erkannt wird, das vor einer Schranke am Eingang des Parkhauses wartet. Aus US 2014/0213176 A1, US 2014/0244504 A1, US2013/0281017 A1 und EP 2124177 A1 sind weitere Bezahlsysteme mit Kraftfahrzeugen bekannt, welche durch Funkverbindungen ausgelöst werden.

Der Erfindung liegt die Aufgabe zugrunde, die Auslösung eines automatisierten Bezahlvorganges von einem Kraftfahrzeug aus zu ermöglichen, ohne dass hierzu eine aufwendige technische Anpassung des Kraftfahrzeugs nötig ist und dennoch die Wahrscheinlichkeit für eine Manipulation zu betrügerischen Zwecken gering gehalten ist.

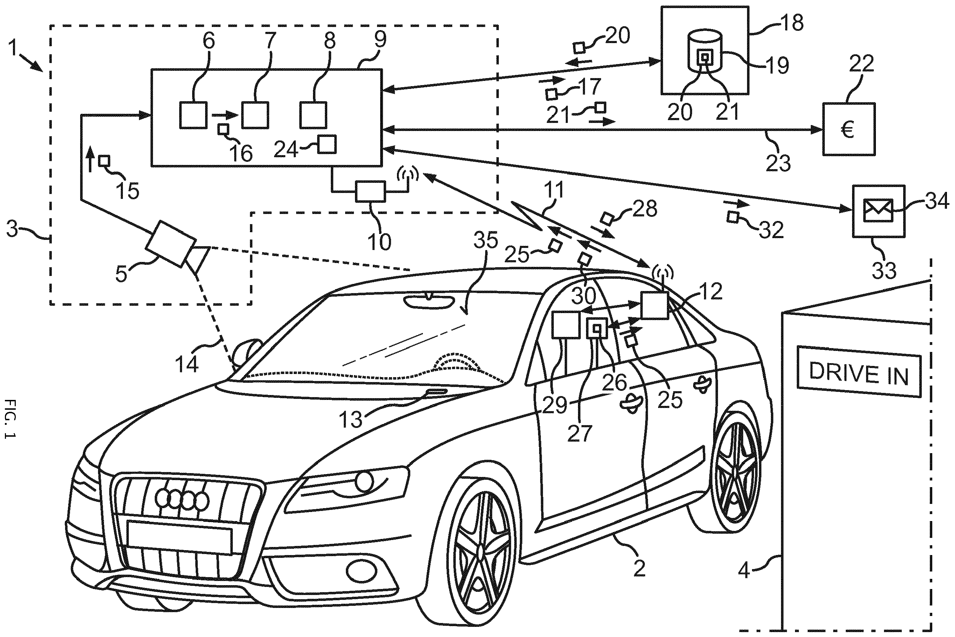

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figur offenbart.

Die Erfindung umfasst ein Verfahren zum Auslösen eines bargeldlosen Bezahlvorgangs von einem Kraftfahrzeug aus. Der Bezahlvorgang selbst wird von einer fahrzeugexternen, stationären Vorrichtung durchgeführt, wobei die Auslösung des Bezahlvorganges von dem Kraftfahrzeug abhängt.

Die Erfindung sieht vor, dass Bestelldaten betreffend ein in und/oder an dem Kraftfahrzeug bereitzustellendes Produkt über eine Funkverbindung aus dem Kraftfahrzeug empfangen werden. Hierdurch ergibt sich der Vorteil, dass eine Person aus dem geschlossenen Kraftfahrzeug heraus die Bestellung aufgeben kann. Die Bestellung über Funkverbindung ist hierbei nicht sicherheitskritisch.

Durch eine optische Erfassungseinrichtung der Vorrichtung werden Bilddaten von einer an dem Kraftfahrzeug angeordneten Repräsentationseinrichtung zum optischen Repräsentieren einer Fahrgestellnummer des Kraftfahrzeugs erzeugt. Mit anderen Worten ist an oder in dem Kraftfahrzeug die Repräsentationseinrichtung angeordnet, welche die Fahrgestellnummer des Kraftfahrzeugs optisch repräsentiert. Die Bilddaten enthalten eine Abbildung dieser Repräsentationseinrichtung. Durch eine Erkennungseinrichtung der Vorrichtung wird in den Bilddaten die Repräsentationseinrichtung erkannt und anhand der erkannten Repräsentationseinrichtung die Fahrgestellnummer des Kraftfahrzeugs ermittelt. Somit ist in der Vorrichtung die Fahrgestellnummer des optisch über die Erfassungseinrichtung erfassten Kraftfahrzeugs bekannt oder vorhanden. Mit anderen Worten liegen Fahrgestellnummerdaten in der Vorrichtung vor. Durch eine Abrufeinrichtung werden in Abhängigkeit von der ermittelten Fahrgestellnummer Nutzerdaten eines Nutzers aus einem Datenspeicher ermittelt. Die Abrufeinrichtung kann also beispielsweise über das Internet bei einem Server die Nutzerdaten anfordern oder abfragen. Der Datenspeicher kann auch in der Vorrichtung selbst bereitgestellt sein. Die Nutzerdaten enthalten Bankverbindungsdaten für eine bargeldlose Bezahlung. Durch eine Steuereinrichtung der Vorrichtung wird dann der Bezahlvorgang auf der Grundlage der Bankverbindungsdaten bargeldlos durchgeführt. Beispielsweise kann also ein Einzugsverfahren auf der Grundlage der Bankverbindungsdaten ausgelöst oder angestoßen werden.

Die Erfindung sieht vor, dass Beschreibungsdaten betreffend die zu bezahlende Ware und/oder Dienstleistung über eine Funkverbindung in das Kraftfahrzeug übertragen werden. Hierdurch ergibt sich der Vorteil, dass in dem Kraftfahrzeug eine Überprüfung der bestellten Ware und/oder Dienstleistung erfolgen kann, beispielsweise visuell durch einen Fahrer.

Die Erfindung sieht vor, dass die Vorrichtung eine Kommunikationseinrichtung aufweist, durch welche eine Funkverbindung mit einer korrespondierenden Kommunikationseinrichtung des Kraftfahrzeugs aufgebaut werden kann. Die Erfindung sieht vor, dass das Abrufen der Nutzerdaten und/oder die Durchführung des Bezahlvorganges nur erfolgt, falls ein Freigabesignal aus einer biometrischen Abtasteinrichtung des Kraftfahrzeugs empfangen wird, wobei das Freigabesignal eine Identität einer Person, von welcher die Abtasteinrichtung biometrische Daten empfängt, bestätigt oder angibt. Mit anderen Worten ist die Repräsentation der Fahrgestellnummer alleine nicht ausreichend, um den Bezahlvorgang vom Kraftfahrzeug aus auszulösen. Zusätzlich muss eine Person in dem Kraftfahrzeug biometrische Daten an der biometrischen Abtasteinrichtung eingeben, also beispielsweise ihre Iris durch die Abtasteinrichtung scannen lassen. Nur falls durch die Abtasteinrichtung das Freigabesignal betreffend die Bestätigung der Identität der Person oder die Angabe der Personenidentität an die Vorrichtung übermittelt oder aussendet wird, wird der Bezahlvorgang durchgeführt. Somit ist es sogar unmöglich, durch Stehlen des Kraftfahrzeugs den Bezahlvorgang durch eine andere Person auslösen zu lassen.

Durch die Erfindung ergibt sich der Vorteil, dass die Durchführung des Bezahlvorgangs nur möglich ist, wenn das Kraftfahrzeug selbst in den Erfassungsbereich der optischen Erfassungseinrichtung gebracht wird, damit durch die Erfassungseinrichtung die Repräsentationseinrichtung zum Repräsentieren der Fahrgestellnummer erfasst werden kann. Man verlässt sich also nicht auf ein Funksignal, das abgefangen oder nachgebildet werden könnte.

Zu der Erfindung gehören auch optionale Weiterbildungen, durch deren Merkmale sich zusätzliche Vorteile ergeben.

Gemäß einer Weiterbildung wird als Repräsentationseinrichtung eine geschriebene Zeichenfolge der Fahrgestellnummer erfasst, wie sie beispielsweise hinter einer Frontscheibe oder Windschutzscheibe des Kraftfahrzeugs aufgeschrieben oder dargestellt sein kann. Die Repräsentation als geschriebene Zeichenfolge weist den Vorteil auf, dass sie auch von einer Person ohne Hilfsmittel verifizierbar ist. Eine zusätzliche oder alternative Weiterbildung hierzu sieht vor, dass die Fahrgestellnummer als QR-Code (QR - Quick Response, schnelle Antwort) erfasst wird. Hierdurch ergibt sich der Vorteil einer robusten maschinellen Erfassung der Fahrgestellnummer. Bevorzugt umfasst der QR-Code auch Redundanzdaten für eine Fehlererkennung und/oder Fehlerkorrektur. Hierdurch kann beispielsweise bei Regen, wenn der QR-Code durch Regentropfen für die Erkennungseinrichtung nicht vollständig erkennbar oder nur verfälscht erfasst wird, dennoch ergänzt werden.

Eine Weiterbildung sieht vor, dass die Repräsentationseinrichtung durch eine Videokamera erfasst wird. Hierdurch ergibt sich der Vorteil, dass die Repräsentationseinrichtung bei bewegtem Kraftfahrzeug erfasst werden kann. Beispielsweise kann hierbei auch ein sich verändernder Lichtreflex an der Windschutzscheibe bei der Erkennung durch die Erkennungseinrichtung kompensiert werden. Eine alternative Weiterbildung dazu sieht vor, dass die Erfassungseinrichtung eine Einzelbildkamera zum Erfassen der Repräsentationseinrichtung nutzt. Hierdurch ergibt sich der Vorteil, dass mit geringen Rechenaufwand die Erkennung der Repräsentationseinrichtung in den Bilddaten möglich ist.

Eine Weiterbildung sieht vor, dass die Vorrichtung das Freigabesignal aus einem Fingerabdruck-Scanner als Abtasteinrichtung empfängt. Hierdurch ergibt sich der Vorteil, dass ein Fingerabdruck-Scanner, wie er beispielsweise auch zum Freischalten einer Motorstartfunktion des Kraftfahrzeugs bereits in dem Kraftfahrzeug vorhanden sein kann, auch zum Freischalten des Bezahlvorgangs genutzt werden kann.

Eine Weiterbildung sieht vor, dass Belegdaten betreffend den Bezahlvorgang an eine in den Nutzerdaten hinterlegte Nachrichtenadresse ausgesendet werden. Beispielsweise kann eine E-Mail-Nachricht generiert werden, welche den Bezahlvorgang durch die Belegdaten beschreibt. Hierdurch ergibt sich der Vorteil, dass auch automatisiert eine Quittung und/oder ein Beleg betreffend dem Bezahlvorgang erzeugt wird.

Wie bereits ausgeführt, umfasst die Erfindung auch eine Vorrichtung zum stationären Betrieb für eine bargeldlose Bezahlung von einem Kraftfahrzeug aus. Die Vorrichtung weist eine optische Erfassungseinrichtung zum Erfassen von Bilddaten von einer an dem Kraftfahrzeug angeordneten Repräsentationseinrichtung auf, wobei die Repräsentationseinrichtung eine Fahrgestellnummer des Kraftfahrzeugs optisch darstellt oder repräsentiert. Die optische Erfassungseinrichtung kann beispielsweise eine Videokamera oder eine Einzelbildkamera aufweisen. Des Weiteren weist die Vorrichtung eine Erkennungseinrichtung zum Ermitteln der Repräsentationseinrichtung in den Bilddaten und zum Ermitteln der Fahrgestellnummer des Kraftfahrzeugs anhand der erkannten Repräsentationseinrichtung auf. Die Erkennungseinrichtung kann beispielsweise als ein bildverarbeitendes Programmmodul in einer Recheneinrichtung der Vorrichtung bereitgestellt sein. Des Weiteren weist die Vorrichtung eine Abrufeinrichtung zum Ermitteln von Nutzerdaten eines Nutzers aus einem Datenspeicher in Abhängigkeit von der ermittelten Fahrgestellnummer auf, wobei die Nutzerdaten Bankverbindungsdaten für eine bargeldlose Bezahlung enthalten. Eine solche Abrufeinrichtung kann beispielsweise ein Programmmodul zum Abfragen der Nutzerdaten aus einem Server des Internets und/oder ein Programmmodul zum Auslesen eines lokalen Datenspeichers der Vorrichtung umfassen. Des Weiteren weist die Vorrichtung eine Steuereinrichtung zum bargeldlosen Durchführen des Bezahlvorgangs auf der Grundlage der Bankverbindungsdaten auf. Auch die Steuereinrichtung kann ein Programmmodul der besagten Recheneinrichtung sein. Desweiteren weist die Vorrichtung eine Kommunikationseinrichtung auf, durch welche eine Funkverbindung mit einer korrespondierenden Kommunikationseinrichtung des Kraftfahrzeugs aufgebaut werden kann.

Insgesamt sind die beschriebenen Programmmodule und die optische Erfassungseinrichtung dazu eingerichtet, eine Ausführungsform des erfindungsgemäßen Verfahrens durchzuführen. Mit anderen Worten umfassen die Programmmodule entsprechende Programminstruktionen, bei deren Ausführung durch die Recheneinrichtung eine Ausführungsform des erfindungsgemäßen Verfahrens ausgeführt oder durchgeführt wird.

Schließlich gehört zu der Erfindung auch ein Bezahlsystem für eine bargeldlose Bezahlung von einem Kraftfahrzeug aus, wobei sich das Bezahlsystem aus einer Kombination einer Ausführungsform der erfindungsgemäßen Vorrichtung und zumindest einem Kraftfahrzeug mit der beschriebenen optischen Repräsentationseinrichtung der Fahrgestellnummer, der beschriebenen Kommunikationseinrichtung und der beschriebenen biometrischen Abtasteinrichtung ergibt.

Im Folgenden ist ein Ausführungsbeispiel der Erfindung beschrieben. Hierzu zeigt die einzige Figur (Fig.) eine schematische Darstellung einer Ausführungsform des erfindungsgemäßen Bezahlsystems.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Bezahlsystem 1, das ein Kraftfahrzeug 2 und eine fahrzeugexterne, stationäre Vorrichtung 3 umfassen kann. Bei dem Kraftfahrzeug 1 kann es sich beispielsweise um einen Kraftwagen, insbesondere einen Personenkraftwagen oder Lastkraftwagen handeln. Zur Veranschaulichung der Erfindung sei angenommen, dass das Kraftfahrzeug 2 bei einem Anbieter 4 für ein Produkt vorgefahren ist, weil der Fahrer (nicht dargestellt) des Kraftfahrzeugs 2 vom Kraftfahrzeug aus ein Produkt, also beispielsweise eine Dienstleistung oder eine Ware, einkaufen möchte. Bei dem Anbieter 4 kann es sich beispielsweise um eine Einfahrtskontrolle für einen zu bezahlenden Parkplatz oder ein Parkhaus handeln, einen Dienstleister wie beispielsweise eine Autowaschanlage oder ein Restaurant oder eine Apotheke oder eine Bank oder eine Mautstation, wobei diese Aufzählung nur beispielhaft ist.

Bei dem Kraftfahrzeug 2 kann mittels des Bezahlsystems 1 die bestellte Ware oder Dienstleistung vom Kraftfahrzeug 2 aus bezahlt werden. Hierzu wird die Vorrichtung 3 des Bezahlsystems 1 genutzt. Die Vorrichtung 3 kann eine optische Erfassungseinrichtung 5, eine Erkennungseinrichtung 6, eine Abrufeinrichtung 7 und eine Steuereinrichtung 8 aufweisen. Die Einrichtungen 6, 7, 8 können beispielsweise Programmmodule einer Recheneinrichtung 9 der Vorrichtung 3 sein. Die Vorrichtung 3 kann auch eine Kommunikationseinrichtung 10 aufweisen, durch welche eine Funkverbindung 11 mit einer korrespondierenden Kommunikationseinrichtung 12 des Kraftfahrzeugs 2 aufgebaut werden kann. Beispielsweise können die Kommunikationseinrichtungen 10, 12 die Funkverbindung 11 auf der Grundlage eines WLAN-Standards aufbauen.

An oder in dem Kraftfahrzeug 2 kann eine Repräsentationseinrichtung 13 bereitgestellt sein, welche die unveränderliche Fahrgestellnummer des Kraftfahrzeugs 2 repräsentiert. Die Repräsentationseinrichtung 13 kann beispielsweise eine Zeichenfolge (zum Beispiel: "WV2ZZZ2K...") oder auch ein QR-Code sein.

Ein Erfassungsbereich 14 der optischen Erfassungseinrichtung 5 ist in einen Bereich ausgerichtet, in welchem sich das Kraftfahrzeug 2 während der Durchführung des Bezahlvorgangs für das bestellte Produkt bestimmungsgemäß befinden muss. Durch die optische Erfassungseinrichtung 5 wird von dem Kraftfahrzeug 2 zumindest die Repräsentationseinrichtung 13 erfasst. Die optische Erfassungseinrichtung 5 kann hierzu eine Videokamera oder eine Einzelbildkamera aufweisen. Die optische Erfassungseinrichtung 5 erzeugt Bilddaten 15, in welchen die optisch erfasste Repräsentationseinrichtung 13 abgebildet oder dargestellt ist. Durch die Erkennungseinrichtung 6 wird anhand der Bilddaten 15 die Information über die Fahrgestellnummer, wie sie durch die Repräsentationseinrichtung 13 repräsentiert ist, extrahiert oder erkannt. Die Erkennungseinrichtung 6 kann hierzu beispielsweise auf der Grundlage einer Methode für die Bilderkennung, beispielsweise unter Nutzung von HMMs (HMM: Hidden Markov Model), ausgestaltet sein.

Die anhand der Bilddaten 15 ermittelte Fahrgestellnummer 16 kann durch die Erkennungseinrichtung 6 der Abrufeinrichtung 7 bereitgestellt werden. Durch die Abrufeinrichtung 7 kann beispielsweise ein Anforderungssignal 17 an eine vorrichtungsexterne Servereinrichtung 18, beispielsweise eine Internet-Datenbank, ausgesendet werden. Das Anforderungssignal 17 gibt die Fahrgestellnummer 16 an. Die Servereinrichtung 18 kann einen Datenspeicher 19 aufweisen, in welchem zu der Fahrgestellnummer 16 Nutzerdaten 20 gespeichert sein können, welche Bankverbindungsdaten 21 enthalten können. Die Servereinrichtung 18 stellt die Nutzerdaten 20 der Steuereinrichtung 8 bereit. Der Datenspeicher 19 kann auch Bestandteil der Vorrichtung 3 sein.

Durch die Steuereinrichtung 8 wird auf der Grundlage der Bankverbindungsdaten 21 aus dem Datenspeicher 19 bei einem Kreditinstitut 22 der Bezahlvorgang für das Produkt eingeleitet. Dies kann beispielsweise über eine Internetverbindung 23 durchgeführt werden.

Bei der Vorrichtung kann zusätzlich eine Sicherungseinrichtung 24 vorgesehen sein, welche beispielsweise dazu eingerichtet sein kann, die Abrufeinrichtung und/oder die Steuereinrichtung zu blockieren, falls folgende Überprüfung der Identität einer in dem Kraftfahrzeug 2 befindlichen Person fehlschlägt.

Die Sicherungseinrichtung 24 kann beispielsweise über die Funkverbindung 11 aus dem Kraftfahrzeug 2 ein Freigabesignal 25 empfangen, welches bestätigt, dass sich eine bestimmte Person im Kraftfahrzeug 2 befindet, oder welches die in dem Kraftfahrzeug 2 sitzende Person identifiziert. Das Freigabesignal 20 kann auf der Grundlage von biometrischen Daten 26 erzeugt werden, welche durch eine biometrische Abtasteinrichtung 27 des Kraftfahrzeugs 2 werden können, welche die biometrischen Daten 26 von einer in dem Kraftfahrzeug 2 befindlichen Person erzeugt. Die Abtasteinrichtung 27 kann beispielsweise ein Fingerabdruck-Scanner sein. Die Abtasteinrichtung 27 kann als Fingerabdruck-Scanner beispielsweise in einer Taste in einer Mittelkonsole des Kraftfahrzeugs 2 oder an einem Bildschirm des Kraftfahrzeugs 2 angeordnet sein.

Um andersherum der Person im Kraftfahrzeug 2 eine Überprüfung des Bezahlvorganges zu ermöglichen, kann vorgesehen sein, das Beschreibungsdaten 28, welche das bestellte Produkt und/oder den zu bezahlenden Betrag beschreiben, von der Vorrichtung 3 zum Kraftfahrzeug 2 beispielsweise über die Funkverbindung 11 übermittelt werden und beispielsweise im Kraftfahrzeug 2 durch eine Anzeigeeinrichtung 29 der Person im Kraftfahrzeug 2 visuell dargestellt werden. Die Anzeigeeinrichtung 29 kann beispielsweise auf der Grundlage eines Infotainment-Systems (Informations-UnterhaltungsSystem) des Kraftfahrzeug 2 realisiert sein.

Zur Steigerung des Komforts kann vorgesehen sein, dass die Bestellung von der Person im Kraftfahrzeug 2 aus ebenfalls per Funk abgegeben oder aufgegeben kann, wozu aus dem Kraftfahrzeug 2 Bestelldaten 30 beispielsweise über die Funkverbindung 11 an die Vorrichtung 3 oder direkt an den Anbieter 4 ausgesendet werden können.

Nach dem Durchführen des Bezahlvorgangs kann durch die Steuereinrichtung eine Nachricht mit Belegdaten 32 erzeugt werden, die beispielsweise in einem E-Mail-Server 33 an eine Nachrichtenadresse 34 hinterlegt werden kann. Die Nachrichtenadresse 34 kann ebenfalls Bestandteil der Nutzerdaten 20 sein und beispielsweise die Adresse der bezahlenden Person angeben.

Insgesamt wird also bei dem Bezahlsystem 1 die Fahrgestellnummer 16 des Kraftfahrzeugs 2 als Bezahlfunktion genutzt. Die Fahrgestellnummer identifiziert das Kraftfahrzeug 1 eindeutig und ist auch einer Person, nämlich dem Halter des Kraftfahrzeugs 2 zugeordnet. Die Fahrgestellnummer 16 ist sichtbar, beispielsweise an einer Frontscheibe 35 des Kraftfahrzeugs 2 von außen einsehbar.

Über die Fahrgestellnummer wird dabei die Bankverbindung und die E-Mail-Adresse des Halters hinterlegt. Sie dient in Verbindung mit der Anzeigeeinrichtung 29 und der Abtasteinrichtung 27 des Kraftfahrzeugs 2 als Identifikation. Bei in Inanspruchnahme einer Dienstleistung (Parken, Service, Drive-In (Restaurant, Apotheke, Bank, Maut)) wird die Fahrgestellnummer gescannt. Der Bestellvorgang (zum Beispiel Rechnung Essen und Getränke) wird über die Funkverbindung 11, beispielsweise WLAN, im Kraftfahrzeug 2 empfangen und erscheint auf der Anzeigevorrichtung 29. Falls die Person mit der Bestellung einverstanden ist, wird über einen Fingerabdruck die Bezahlung ausgelöst. Eine Quittung oder ein Beleg kann dann wieder an die E-Mail-Adresse ausgesendet werden.

Somit ist ein bargeldloses Bezahlen für Dienste, die aus dem Kraftfahrzeug 2 oder via Kraftfahrzeug 2 erledigt werden können, möglich.

Insgesamt zeigt das Beispiel, wie durch die Erfindung eine Fahrgestellnummer als Bezahlfunktion genutzt werden kann.

## Patentansprüche

1. Verfahren zum Auslösen eines bargeldlosen Bezahlvorganges von einem Kraftfahrzeug (2) aus, wobei in einer fahrzeugexternen, stationären Vorrichtung (3):
- Bestelldaten (30) betreffend ein in und/oder an dem Kraftfahrzeug (2) breitzustellendes Produkt über eine Funkverbindung (11) aus dem Kraftfahrzeug (2) empfangen werden, wobei die Vorrichtung (3) eine Kommunikationseinrichtung (10) aufweist, durch welche die Funkverbindung (11) mit einer korrespondierenden Kommunikationseinrichtung (12) des Kraftfahrzeugs (2) aufgebaut wird,
- durch eine optische Erfassungseinrichtung (5) der Vorrichtung (3) Bilddaten (15) von einer an dem Kraftfahrzeug (2) angeordneten Repräsentationseinrichtung (13) zum optischen Repräsentieren einer Fahrgestellnummer (16) des Kraftfahrzeugs (2) erzeugt werden,
- durch eine Erkennungseinrichtung (6) der Vorrichtung (3) in den Bilddaten (15) die Repräsentationseinrichtung (13) erkannt und anhand der erkannten Repräsentationseinrichtung (13) die Fahrgestellnummer (16) des Kraftfahrzeugs (2) ermittelt wird,
- durch eine Abrufeinrichtung (7) der Vorrichtung (3) in Abhängigkeit von der ermittelten Fahrgestellnummer (16) Nutzerdaten (20) eines Nutzers aus einem Datenspeicher (19) ermittelt werden, wobei die Nutzerdaten (20) Bankverbindungsdaten (21) für eine bargeldlose Bezahlung enthalten,
- Beschreibungsdaten (28) betreffend das zu bezahlende Produkt über eine Funkverbindung (11) zur Überprüfung des bestellten Produkts in das Kraftfahrzeug (2) übertragen werden, und
- durch eine Steuereinrichtung (8) der Vorrichtung (3) der Bezahlvorgang auf der Grundlage der Bankverbindungsdaten (21) bargeldlos durchgeführt wird, wobei das Abrufen der Nutzerdaten (20) und/oder die Durchführung des Bezahlvorganges nur erfolgt, falls ein Freigabesignal (25) aus einer biometrischen Abtasteinrichtung (27) des Kraftfahrzeugs (2) von der Vorrichtung (3) über die Funkverbindung (11) empfangen wird und wobei das Freigabesignal (25) eine Identität einer Person, von welcher die Abtasteinrichtung (27) biometrische Daten (26) empfängt, bestätigt oder angibt.

2. Verfahren nach Anspruch 1, wobei als Repräsentationseinrichtung (13) eine geschriebene Zeichenfolge der Fahrgestellnummer (16) und/oder ein die Fahrgestellnummer (16) darstellender QR-Code erfasst wird.

3. Verfahren nach Anspruch 2, wobei der QR-Code auch Redundanzdaten für eine Fehlererkennung und/oder Fehlerkorrektur umfasst und hiermit bei Regen, wenn der QR-Code durch Regentropfen für die Erkennungseinrichtung nicht vollständig erkennbar ist oder nur verfälscht erfasst wird, ergänzt wird.

4. Verfahren nach einem der vorhergehenden Ansprüche, wobei die Repräsentationseinrichtung (13) durch eine Videokamera oder eine Einzelbildkamera der Erfassungseinrichtung (5) erfasst wird.

5. Verfahren nach einem der vorhergehenden Ansprüche, wobei die Vorrichtung (3) das Freigabesignal (25) aus einem Fingerabdruck-Scanner als Abtasteinrichtung (27) empfängt.

6. Verfahren nach einem der vorhergehenden Ansprüche, wobei Belegdaten (32) betreffend den Bezahlvorgang an eine in den Nutzerdaten (20) hinterlegte Nachrichtenadresse (34) ausgesendet werden.

7. Vorrichtung (3) zum stationären Betrieb für eine bargeldlose Bezahlung von einem Kraftfahrzeug (2) aus, aufweisend:
- eine optische Erfassungseinrichtung (5) zum Erzeugen von Bilddaten (15) von einer an dem Kraftfahrzeug (2) angeordneten Repräsentationseinrichtung (13) zum optischen Repräsentieren einer Fahrgestellnummer (16) des Kraftfahrzeugs (2),
- eine Erkennungseinrichtung (6) zum Ermitteln der Repräsentationseinrichtung (13) in den Bilddaten (15) und zum Ermitteln der Fahrgestellnummer (16) des Kraftfahrzeugs (2) anhand der erkannten Repräsentationseinrichtung (13),
- eine Abrufeinrichtung (7) zum Ermitteln von Nutzerdaten (20) eines Nutzers aus einem Datenspeicher (19) in Abhängigkeit von der ermittelten Fahrgestellnummer (16), wobei die Nutzerdaten (20) Bankverbindungsdaten (21) für eine bargeldlose Bezahlung enthalten,
- eine Steuereinrichtung (8) zum bargeldlosen Durchführen des Bezahlvorgangs auf der Grundlage der Bankverbindungsdaten (21) und eine Kommunikationseinrichtung (10), durch welche eine Funkverbindung mit einer korrespondierenden Kommunikationseinrichtung (12) des Kraftfahrzeugs (2) aufgebaut werden kann, wobei die Vorrichtung (3) zum Durchführen eines Verfahrens nach einem der vorhergehenden Ansprüche eingerichtet ist.

8. Bezahlsystem (1) für eine bargeldlose Bezahlung von einem Kraftfahrzeug (2) aus, aufweisend eine Vorrichtung (3) nach Anspruch 7 und zumindest ein Kraftfahrzeug (2) mit einer optischen Repräsentationseinrichtung (13) der Fahrgestellnummer (16), einer Kommunikationseinrichtung (12) und einer biometrischen Abtasteinrichtung (27).

## Claims

1. Method for initiating a cashless payment process from a motor vehicle (2), wherein, in a stationary device (3) outside the vehicle:
- order data (30) regarding a product to be provided in and/or on the motor vehicle (2) are received via a radio connection (11) from the motor vehicle (2), the device (3) having a communication device (10) through which the radio connection (11) to a corresponding communication device (12) of the motor vehicle (2) is established,
- an optical detection device (5) of the device (3) generates image data (15) of a representation device (13) arranged on the motor vehicle (2) for optically representing a chassis number (16) of the motor vehicle (2),
- a recognition device (6) of the device (3) recognises the representation device (13) in the image data (15), and, based on the recognised representation device (13), determines the chassis number (16) of the motor vehicle (2),
- a retrieval device (7) of the device (3) determines user data (20) of a user from a data storage medium (19) based on the determined chassis number (16), the user data (20) containing bank account data (21) for a cashless payment,
- descriptive data (28) regarding the product to be paid for are transmitted via a radio connection (11) to the motor vehicle (2) in order to verify the ordered product, and
- a control device (8) of the device (3) performs the cashless payment process, based on the bank account data (21), the retrieval of the user data (20) and/or the execution of the payment process taking place only if an authorisation signal (25) is received from a biometric scanning device (27) of the motor vehicle (2) by the device (3) via the radio connection (11), and the authorisation signal (25) confirming or indicating the identity of a person whose biometric data (26) are received by the scanning device (27).

2. Method according to claim 1, wherein a written character sequence of the chassis number (16) and/or a QR code representing the chassis number (16) are detected as the representation device (13).

3. Method according to claim 2, wherein the QR code also comprises redundant data for error recognition and/or error correction and, in the event of rain, when the recognition device cannot fully recognise the QR code due to raindrops or when the QR code is only incorrectly detected, the QR code is completed using said redundant data.

4. Method according to any of the preceding claims, wherein the representation device (13) is detected by a video camera or a single frame camera of the detection device (5).

5. Method according to any of the preceding claims, wherein the device (3) receives the authorisation signal (25) from a fingerprint scanner as a scanning device (27).

6. Method according to any of the preceding claims, wherein receipt data (32) regarding the payment process are sent to a messaging address (34) which is stored among the user data (20).

7. Device (3) for stationary operation of a cashless payment from a motor vehicle (2), comprising:
- an optical detection device (5) to generate image data (15) of a representation device (13) arranged on the motor vehicle (2) for optically representing a chassis number (16) of the motor vehicle (2),
- a recognition device (6) to determine the representation device (13) in the image data (15), and, based on the recognised representation device (13), to determine the chassis number (16) of the motor vehicle (2),
- a retrieval device (7) to determine user data (20) of a user from a data storage medium (19), based on the determined chassis number (16), the user data (20) containing bank account data (21) for a cashless payment,
- a control device (8) to perform the cashless payment process based on the bank account data (21), and
a communication device (10) through which a radio connection to a corresponding communication device (12) of the motor vehicle (2) can be established,
the device (3) being configured to perform a method according to any of the preceding claims.

8. Payment system (1) for a cashless payment from a motor vehicle (2), having a device (3) according to claim 7 and at least one motor vehicle (2) having an optical representation device (13) for the chassis number (16), a communication device (12) and a biometric scanning device (27).

## Revendications

1. Procédé pour déclencher une opération de paiement sans espèce depuis un véhicule automobile (2), dans lequel dans un dispositif (3) fixe externe au véhicule :
- des données de commande (30) concernant un produit à fournir dans et/ou sur le véhicule automobile (2) sont reçues depuis le véhicule automobile (2) via une liaison radio (11), dans lequel le dispositif (3) présente un dispositif de communication (10), via lequel la liaison radio (11) avec un dispositif de communication correspondant (12) du véhicule automobile (2) est établie,
- via un dispositif de détection optique (5) du dispositif (3), des données d'image (15) sont générées par un dispositif de représentation (13) agencé sur le véhicule automobile (2), pour représenter optiquement un numéro de châssis (16) du véhicule automobile (2),
- le dispositif de représentation (13) est reconnu par un dispositif de reconnaissance (6) du dispositif (3) dans les données d'image (15) et grâce au dispositif de représentation (13) reconnu, le numéro de châssis (16) du véhicule automobile (2) est déterminé,
- des données d'utilisateur (20) d'un utilisateur sont déterminées à partir d'une mémoire de données (19) par un dispositif de récupération (7) du dispositif (3) en fonction du numéro de châssis déterminé (16), dans lequel les données d'utilisateur (20) contiennent des données de connexion bancaires (21) pour un paiement sans espèce,
- des données de description (28) concernant le produit à payer sont transmises au véhicule automobile (2) via une liaison radio (11) pour vérifier le produit commandé, et
- l'opération de paiement est exécutée sans espèce sur la base des données de connexion bancaires (21) par un dispositif de commande (8) du dispositif (3), dans lequel la récupération des données d'utilisateur (20) et/ou l'exécution de l'opération paiement survient uniquement dans le cas où un signal d'autorisation (25) est reçu en provenance du dispositif (3) à partir d'un dispositif de numérisation biométrique (27) du véhicule automobile (2) via la liaison radio (11), et dans lequel le signal d'autorisation (25) confirme ou indique une identité d'une personne à laquelle les données biométriques (26) du dispositif de numérisation (27) correspondent.

2. Procédé selon la revendication 1, dans lequel une suite de caractères écrite du numéro de châssis (16) et/ou un code QR représentant le numéro de châssis (16) est détecté(e) en tant que dispositif de représentation (13).

3. Procédé selon la revendication 2, dans lequel le code QR comprend également des données de redondance pour une détection d'erreur et/ou une correction d'erreur, et ainsi, en cas de pluie, est complété lorsque le code QR n'est pas entièrement reconnaissable par le dispositif de reconnaissance à cause des gouttes d'eau, ou s'il est détecté de manière faussée.

4. Procédé selon l'une quelconque des revendications précédentes, dans lequel le dispositif de représentation (13) est détecté par une caméra vidéo ou un appareil photo du dispositif de détection (5).

5. Procédé selon l'une quelconque des revendications précédentes, dans lequel le dispositif (3) reçoit le signal d'autorisation (25) provenant d'un scanner d'empreinte digitale en tant que dispositif de numérisation (27).

6. Procédé selon l'une quelconque des revendications précédentes, dans lequel des données de document (32) concernant l'opération de paiement sont envoyées à une adresse de message (34) stockée dans les données d'utilisateur (20).

7. Dispositif (3) à fonctionnement stationnaire pour un paiement sans espèce depuis un véhicule automobile (2), présentant :
- un dispositif de détection optique (5) pour générer des données d'image (15) à partir d'un dispositif de représentation (13) agencé sur le véhicule automobile (2) afin de représenter de manière optique un numéro de châssis (16) du véhicule automobile (2),
- un dispositif de reconnaissance (6) pour déterminer le dispositif de représentation (13) dans les données d'image (15) et pour déterminer le numéro de châssis (16) du véhicule automobile (2) grâce au dispositif de représentation (13) reconnu,
- un dispositif de récupération (7) pour déterminer des données d'utilisateur (20) d'un utilisateur à partir d'une mémoire de données (19) en fonction du numéro de châssis déterminé (16), dans lequel les données d'utilisateur (20) contiennent des données de connexion bancaires (21) pour un paiement sans espèce,
- un dispositif de commande (8) pour exécuter le paiement sans espèce sur la base des données de connexion bancaires (21) et un dispositif de communication (10), au moyen duquel une liaison radio peut être établie avec un dispositif de communication correspondant (12) du véhicule automobile (2),
dans lequel le dispositif (3) est adapté pour exécuter un procédé selon l'une quelconque des revendications précédentes.

8. Système de paiement (1) pour un paiement sans espèce depuis un véhicule automobile (2), présentant un dispositif (3) selon la revendication 7 et au moins un véhicule automobile (2) avec un dispositif de représentation optique (13) du numéro de châssis (16), un dispositif de communication (12) et un dispositif de numérisation biométrique (27).
